# EUROPEAN PATENT APPLICATION

(11) **EP 3 822 903 A2**
(43) Date of publication of application: **19.05.2021**
(21) Application number: 21166404.0
(22) Date of filing: 31.03.2021
(51) Int. Cl.: G06Q 30/02, G06Q 50/00

(54) **METHOD AND APPARATUS FOR PUSHING ADVERTISEMENT, ELECTRONIC DEVICE, STORAGE MEDIUM, AND COMPUTER PROGRAM PRODUCT**

(30) Priority: 14.08.2020 CN 202010820910
(71) Applicant: Beijing Baidu Netcom Science and Technology Co., Ltd., Beijing 100085 (CN)
(72) Inventor: LI, Guang, Beijing, 100085 (CN); WANG, Quanxiang, Beijing, 100085 (CN); HU, Bin, Beijing, 100085 (CN)
(74) Representative: Lucke, Andreas

(57) **Abstract**

A method, apparatus, electronic device and storage medium for pushing an advertisement are provided. An implementation of the method may include: acquiring a to-be-pushed advertisement in an advertisement docking system; pushing the to-be-pushed advertisement to a user selected by a current user through a social platform; and in response to the user selected by the current user performing a predetermined operation on the to-be-pushed advertisement, receiving, from a settlement profit sharing system, an advertisement pushing revenue generated based on the predetermined operation.

## Description

### TECHNICAL FIELD

The present disclosure relates to the field of Internet technology, particularly to smart push technology, and more particularly to a method and apparatus for pushing an advertisement, an electronic device, a storage medium, and a computer program product.

### BACKGROUND

Advertising refers to a publicity method that openly and widely conveys information to the public through a certain form of media for a particular need. The essence of advertising is to spread product information to the audience, thereby promoting product sales. At present, advertising production is usually completed by a professional advertising company. Advertising dissemination develops compound dissemination through a variety of channels, with mass media as the main body, and coordinates with other medias.

The existing advertisement pushing method basically releases an advertisement directly to the audience through an advertisement pushy platform, and the content of advertisement are pushed to the audiences without distinguishing between the types of the audiences. This kind of all-round pushing method makes most advertisements unable to be received by the audiences who are really in need and interested; moreover, the pushing method based on the advertisement pushing platform lacks an effective incentive mechanism, so that an advertising performance is not ideal; in addition, the scale of the advertisement pushy platform is limited, so that the scale of advertisements released through the advertisement pushing platform is bound to be limited; and at the same time, in an advertisement pushing process, personal influence of lead users such as core users, and VIP users of the platform cannot be effectively used.

### SUMMARY

Embodiments of the present disclosure provide a method and an apparatus for pushing an advertisement, an electronic device, a storage medium, and a computer program product.

According to a first aspect, some embodiments of the present disclosure provide a method for pushing an advertisement. The method includes: acquiring a to-be-pushed advertisement in an advertisement docking system; pushing the to-be-pushed advertisement to a user selected by a current user through a social platform; and in response to the user selected by the current user performing a predetermined operation on the to-be-pushed advertisement, receiving, from a settlement profit sharing system, an advertisement pushing revenue generated based on the predetermined operation.

According to a second aspect, some embodiments of the present disclosure provide a method for pushing an advertisement. The method includes: providing a to-be-pushed advertisement to a current user through an advertisement docking system, such that the current user pushes the to-be-pushed advertisement to a user selected by the current user through a social platform; and in response to the user selected by the current user performing a predetermined operation on the to-be-pushed advertisement, sending an advertisement pushing revenue generated based on the predetermined operation to the current user by a settlement profit sharing system.

According to a third aspect, some embodiments of the present disclosure provide an apparatus for pushing an advertisement. The apparatus includes an acquisition module, a pushing module and a receiving module. The acquisition module is configured to acquire a to-be-pushed advertisement in an advertisement docking system; the pushing module is configured to push the to-be-pushed advertisement to a user selected by a current user through a social platform; and the receiving module, configured to, in response to the user selected by the current user performing a predetermined operation on the to-be-pushed advertisement, receive from a settlement profit sharing system an advertisement pushing revenue generated based on the predetermined operation.

According to a fourth aspect, some embodiments of the present disclosure provide an apparatus for pushing an advertisement. The apparatus includes an advertisement providing module and a revenue generation module. The advertisement providing module, configured to provide a to-be-pushed advertisement to a current user through an advertisement docking system, such that the current user pushes the to-be-pushed advertisement to a user selected by the current user through a social platform; and the revenue generation module is configured to, in response to the user selected by the current user performing a predetermined operation on the to-be-pushed advertisement, send an advertisement pushing revenue generated based on the predetermined operation to the current user by a settlement profit sharing system.

According to a fifth aspect, some embodiments of the present disclosure provide an electronic device. The electronic device includes at least one processor, and a memory, communicatively connected to the at least one processor, where the memory, storing instructions executable by the at least one processor, and the instructions, when executed by the at least one processor, cause the at least one processor to perform the method for pushing an advertisement according to any one of embodiments of the present disclosure.

According to a sixth aspect, some embodiments of the present disclosure provide a non-transitory computer readable storage medium. The storage medium stores computer instructions thereon, the computer instructions, when executed by a processor, cause the processor to perform the method according to any one of embodiments of the present disclosure.

According to a seventh aspect, some embodiments of the present disclosure provide a computer program product comprising a computer program, the computer program, when executed by a processor, causes the processor to implement the method according to any one of embodiments of the present disclosure.

The technology of the present disclosure solves the technical problem that, in the existing technology, an advertisement pushing scale is limited and the method for pushing an advertisement on an advertisement pushing platform lacks an effective incentive mechanism, so that an advertising performance is not ideal. Embodiments of the present disclosure can effectively push an advertisement to consumer groups, independent of the scale of an advertisement pushy platform, so as to achieve the purpose of improving a pushing efficiency and user activity.

It should be understood that the content described in this section is not intended to identify key or important features of embodiments of the present disclosure, nor is it intended to limit the scope of the present disclosure. Other features of the present disclosure will be easily understood by the following description.

### BRIEF DESCRIPTION OF THE DRAWINGS

The accompanying drawings are used to better understand the present solution and do not constitute a limitation to the present disclosure, in which:
Fig. 1 is a schematic flowchart of a method for pushing an advertisement according to an embodiment of the present disclosure;
Fig. 2 is a schematic flowchart of a method for pushing an advertisement according to another embodiment of the present disclosure;
Fig. 3 is a schematic flowchart of yet a method for pushing an advertisement according to another embodiment of the present disclosure;
Fig. 4 is a schematic flowchart of a method for pushing an advertisement according to yet another embodiment of the present disclosure;
Fig. 5 is a schematic structural diagram of a system for pushing an advertisement according to an embodiment of the present disclosure;
Fig. 6 is a schematic structural diagram of an apparatus for pushing an advertisement according to an embodiment of the present disclosure;
Fig. 7 is a schematic structural diagram of a apparatus for pushing an advertisement according to another embodiment of the present disclosure;
Fig. 8 is a schematic structural diagram of an apparatus for pushing an advertisement according to yet another embodiment of the present disclosure;
Fig. 9 is a schematic structural diagram of an apparatus for pushing an advertisement according to another embodiment of the present disclosure; and
Fig. 10 is a block diagram of an electronic device used to implement the method for pushing an advertisement according to an embodiment of the present disclosure.

### DETAILED DESCRIPTION OF EMBODIMENTS

The following describes example embodiments of the present disclosure with reference to the accompanying drawings, which include various details of embodiments of the present disclosure to facilitate understanding, and should be regarded as merely exemplary. Therefore, those of ordinary skill in the art should realize that various changes and modifications may be made to the embodiments described herein without departing from the scope and spirit of the present disclosure. Likewise, for clarity and conciseness, descriptions of well-known functions and structures are omitted in the following description.

### Embodiment 1

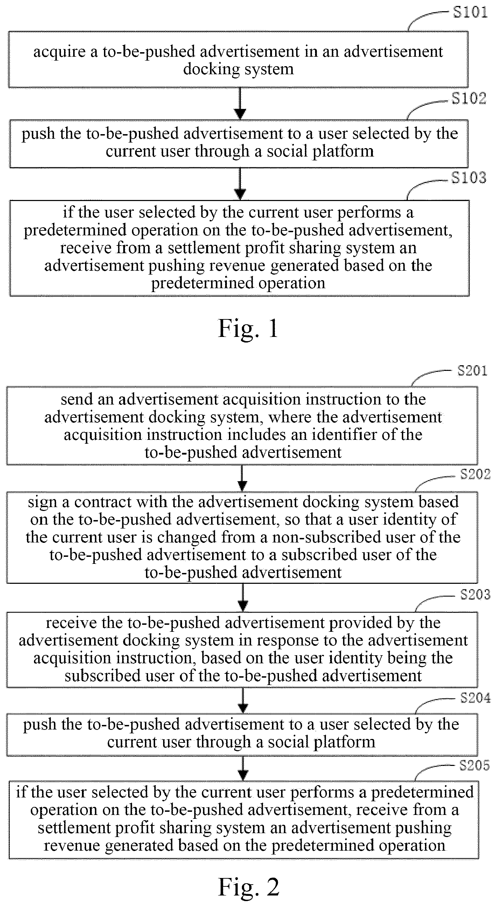

Fig. 1 is a schematic flowchart of a method for pushing an advertisement provided by Embodiment 1 of the present disclosure. The method may be performed by an apparatus for pushing an advertisement or a client device. The apparatus or the client device may be implemented by software and/or hardware, and may be integrated in any smart device having a network communication function. As shown in Fig. 1, the method for pushing an advertisement may include the following steps:

S101, acquiring a to-be-pushed advertisement in an advertisement docking system.

In an embodiment of the present disclosure, a current user may acquire, through the client device, the to-be-pushed advertisement in the advertisement docking system. The current user may send an advertisement acquisition instruction to the advertisement docking system through the client device, the advertisement acquisition instruction may include an identifier of the to-be-pushed advertisement. For example, the current user may log in to the advertisement docking system first. Then, after logging in, the current user may independently select an advertisement as the to-be-pushed advertisement.

Step 102, pushing the to-be-pushed advertisement to a user selected by the current user through a social platform.

In an embodiment of the present disclosure, the current user may push, through the social platform, the to-be-pushed advertisement to a user selected by the current user. Specifically, each piece of advertisement in the advertisement docking system may correspond to an advertisement identifier (ID). In addition, each user also corresponds to a user ID. After acquiring the to-be-pushed advertisement, the current user may send the to-be-pushed advertisement to a social platform such as WeChat or Weibo, so that users, such as friends and fans, who follow the current user may perform operations such as clicking, reading, downloading, or purchasing on the advertisement. For example, the current user may push the to-be-pushed advertisement to his friends or fans through the social platform. For example, the current user pushes the to-be-pushed advertisement to user A and user B; Further, user A may also push the to-be-pushed advertisement to his friends, for example, user A may also push the to-be-pushed advertisement to user Ai and user A2; User B may also push the to-be-pushed advertisement to his friends, for example, user B may also push the to-be-pushed advertisement to user Bi and user B2; and so on.

Step 103, if the user selected by the current user performs a predetermined operation on the to-be-pushed advertisement, receiving, from a settlement profit sharing system, an advertisement pushing revenue generated based on the predetermined operation.

In an embodiment of the present disclosure, if the user selected by the current user performs a predetermined operation on the to-be-pushed advertisement, the current user may receive, through the client device, the advertisement pushing revenue generated based on the predetermined operation and sent by the settlement profit sharing system. If the user selected by the current user performs a predetermined operation on the to-be-pushed advertisement, a distribution statistics system may acquire an operation type corresponding to the predetermined operation through an advertisement server; where the predetermined operation may include, but is not limited to: clicking, downloading, reading, forwarding, purchasing, etc. Therefore, the distribution statistics system may count the number of the clicking, downloading, reading, forwarding, purchasing and other operations for each piece of advertisement. That is, count the clicking, downloading, reading, forwarding, purchasing and other operations into the current user's productivity. For example, the operation type corresponding to "clicking" is 001; the operation type corresponding to "downloading" is 002; the operation type corresponding to "forwarding" is 003; the operation type corresponding to "purchasing" is 004; and so on. After acquiring statistical data of the predetermined operations performed on the to-be-pushed advertisement, the distribution statistics system may send the statistical data of the predetermined operations performed on the to-be-pushed advertisement to the settlement profit sharing system. Then, the settlement profit sharing system may send to the current user the advertisement pushing revenue which is generated based on the statistical data of the predetermined operations performed on the to-be-pushed advertisement.

The method for pushing an advertisement provided by the embodiment of the present disclosure, first acquires the to-be-pushed advertisement in the advertisement docking system; then pushes, through the social platform, the to-be-pushed advertisement to a user selected by the current user; and receives, from a settlement profit sharing system, an advertisement pushing revenue generated based on the predetermined operation, in response to the user selected by the current user performs a predetermined operation on the to-be-pushed advertisement. That is, embodiments of the present disclosure may push the to-be-pushed advertisement to the user selected by the current user through the social intercourse fission, and the current user may also acquire the advertisement pushing revenue generated based on the predetermined operation performed on the to-be-pushed advertisement by the selected user. In the existing method for pushing an advertisement, it basically releases an advertisement directly to the audience through an advertisement pushy platform, and the content of advertisement are pushed to the audiences without distinguishing between the types of the audiences. This kind of all-round pushing method makes most advertisements unable to be received by the audiences who are really in need and interested; moreover, the pushing method based on the advertisement pushing platform lacks an effective incentive mechanism, so that an advertising performance is not ideal; in addition, the scale of the advertisement pushy platform is limited, so that the scale of advertisements released through the advertisement pushing platform is bound to be limited. Because embodiments of the present disclosure use the technical means of pushing an advertisement through a social platform and generating an advertisement pushing revenue by a settlement profit sharing system, it solves the technical problem that the advertisement pushing scale is limited and the advertising performance is not ideal due to lack of an effective incentive mechanism in the existing technology. The technical solution provided by embodiments of the present disclosure can effectively push advertising creativity to consumer groups independent of the scale of an advertisement pushy platform, so as to achieve the purpose of improving a pushing efficiency and user activity. In addition, the technical solution of embodiments of the present disclosure is simple and convenient to implement, easy to popularize, and has a wider application range.

### Embodiment 2

Fig. 2 is a schematic flowchart of a method for pushing an advertisement according to another embodiment of the present disclosure. As shown in Fig. 2, the method for pushing an advertisement may include the following steps:

Step 201, sending an advertisement acquisition instruction to the advertisement docking system, where the advertisement acquisition instruction includes an identifier of the to-be-pushed advertisement.

In an embodiment of the present disclosure, the current user may send an advertisement acquisition instruction to the advertisement docking system through the client device. The advertisement acquisition instruction may include an identifier of the to-be-pushed advertisement. The current user may log in to the advertisement docking system first. Then, after logging in, the current user may independently select an advertisement as the to-be-pushed advertisement.

S202, signing a contract with the advertisement docking system based on the to-be-pushed advertisement, so that a user identity of the current user is changed from a non-subscribed user of the to-be-pushed advertisement to a subscribed user of the to-be-pushed advertisement.

In an embodiment of the present disclosure, the current user may sign a contract with the advertisement docking system based on the to-be-pushed advertisement, such that the user identity of the current user is changed from the non-subscribed user of the to-be-pushed advertisement to the subscribed user of the to-be-pushed advertisement. For example, the advertisement docking system may send a letter of contract intent to the current user, and the letter of contract intent is used for fixing the information such as advertisement pushing matters and pushing rules with the current user, such as billing methods, pushing requirements, pushing rules. Before the current user signs the letter of contract intent, his/her user identity is a non-subscribed user of the to-be-pushed advertisement. If the current user signs the letter of contract intent, it means that the current user is willing to accept the pushing matters, pushing requirements, pushing rules and other information in the letter of contract intent; in this regard, his/her user identity is changed from the non-subscribed user of the to-be-pushed advertisement to a subscribed user of the to-be-pushed advertisement.

Step 203, receiving the to-be-pushed advertisement provided by the advertisement docking system in response to the advertisement acquisition instruction, based on the user identity being the subscribed user of the to-be-pushed advertisement.

In an embodiment of the present disclosure, the current user may receive the to-be-pushed advertisement provided by the advertisement docking system in response to the advertisement acquisition instruction, based on the user identity being the subscribed user of the to-be-pushed advertisement. Specifically, after signing the letter of contract intent, the current user may download the to-be-pushed advertisement from the advertisement docking system to the client device.

Preferably, in an embodiment of the present disclosure, the current user may also adjust a style of the to-be-pushed advertisement within a predetermined range through the client device, to obtain a style-adjusted to-be-pushed advertisement; and then the current user may distribute the style-adjusted to-be-pushed advertisement with the user ID added to the social platform. For example, the current user may perform an operation such as font conversion and color change on the to-be-pushed advertisement, so as to improve a conversion effect of advertisement pushing in private domain traffic by the current user.

S204, pushing the to-be-pushed advertisement to a user selected by the current user through a social platform.

S205, in response to the user selected by the current user performing a predetermined operation on the to-be-pushed advertisement, receiving, from a settlement profit sharing system, an advertisement pushing revenue generated based on the predetermined operation.

In an embodiment of the present disclosure, when a user, such as a friend or fans, who follow the current user perform a predetermined operation such as clicking, reading, downloading, and purchasing, a service-end device may acquire statistical data of the predetermined operation performed on the to-be-pushed advertisement through a distribution statistics system, and then send the statistical data of the predetermined operation performed on the to-be-pushed advertisement to the current user. Further, the service-end device may also send the statistical data of the predetermined operation performed on the to-be-pushed advertisement through the distribution statistics system to the settlement profit sharing system; and then send, through the settlement profit sharing system, the advertisement pushing revenue generated based on the predetermined operation to the current user.

The method for pushing an advertisement provided by the embodiment of the present disclosure, first the to-be-pushed advertisement in the advertisement docking system is acquired; then the to-be-pushed advertisement is pushed to the user selected by the current user through the social platform; and if the user selected by the current user performs a predetermined operation on the to-be-pushed advertisement, the advertisement pushing revenue generated based on the predetermined operation is received from the settlement profit sharing system. That is, embodiments of the present disclosure may push the to-be-pushed advertisement to the user selected by the current user through social intercourse fission, and the current user may also acquire the advertisement pushing revenue generated based on the predetermined operation performed on the to-be-pushed advertisement by the selected user. In the existing method for pushing an advertisement, it basically releases an advertisement directly to the audience through an advertisement pushy platform, and the content of advertisement are pushed to the audiences without distinguishing between the types of the audiences. This kind of all-round pushing method makes most advertisements unable to be received by the audiences who are really in need and interested; moreover, the pushing method based on the advertisement pushing platform lacks an effective incentive mechanism, so that an advertising performance is not ideal; in addition, the scale of the advertisement pushy platform is limited, so that the scale of advertisements released through the advertisement pushing platform is bound to be limited. Because embodiments of the present disclosure use the technical means of pushing an advertisement through a social platform and generating an advertisement pushing revenue by a settlement profit sharing system, it solves the technical problem that the advertisement pushing scale is limited and the advertising performance is not ideal due to lack of an effective incentive mechanism in the existing technology. The technical solution provided by embodiments of the present disclosure can effectively push advertising creativity to consumer groups independent of the scale of an advertisement pushy platform, so as to achieve the purpose of improving a pushing efficiency and user activity. In addition, the technical solution of embodiments of the present disclosure is simple and convenient to implement, easy to popularize, and has a wider application range.

### Embodiment 3

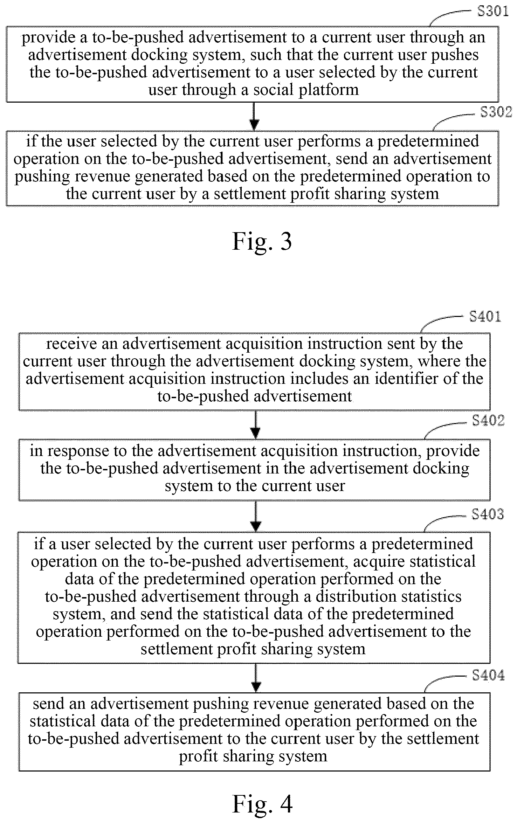

Fig. 3 is a schematic flowchart of yet a method for pushing an advertisement according to another embodiment of the present disclosure. The method may be performed by an apparatus for pushing an advertisement or a service-end device. The apparatus or the service-end device may be implemented by software and/or hardware, and may be integrated in any smart device having a network communication function. As shown in Fig. 3, the method for pushing an advertisement may include the following steps:

S301, providing a to-be-pushed advertisement to a current user through an advertisement docking system, such that the current user pushes the to-be-pushed advertisement to a user selected by the current user through a social platform.

In an embodiment of the present disclosure, the service-end device may provide the to-be-pushed advertisement to the current user through the advertisement docking system, such that the current user may push the to-be-pushed advertisement to the user selected by the current user through a social platform. Specifically, the service-end device may receive an advertisement acquisition instruction sent by the current user through the advertisement docking system. The advertisement acquisition instruction may include an identifier of the to-be-pushed advertisement. For example, the current user may log in to the advertisement docking system first. Then, after logging in, the current user may independently select an advertisement as the to-be-pushed advertisement.

S302, in response to the user selected by the current user performs a predetermined operation on the to-be-pushed advertisement, sending an advertisement pushing revenue generated based on the predetermined operation to the current user by a settlement profit sharing system.

In an embodiment of the present disclosure, the service-end device may send the advertisement pushing revenue generated based on the predetermined operation to the current user through the settlement profit sharing system, if the user selected by the current user performs a predetermined operation on the to-be-pushed advertisement. Specifically, each piece of advertisement in the advertisement docking system corresponds to an advertisement identifier (ID). In addition, each user may also correspond to a user ID. After acquiring the to-be-pushed advertisement, the current user may send the to-be-pushed advertisement to a social platform such as WeChat and Weibo, so that users who follow the current user, such as friends and fans, may perform operations such as clicking, reading, downloading, or purchasing. For example, the current user may push the to-be-pushed advertisement to his friends or fans through the social platform. For example, the current user may push the to-be-pushed advertisement to user A and user B; further, user A may also push the to-be-pushed advertisement to his friends, for example, user A may also push the to-be-pushed advertisement to user Ai and user A2; User B may also push the to-be-pushed advertisement to his friends, for example, user B may also push the to-be-pushed advertisement to user Bi and user B2; and so on.

If a user selected by the current user performs a predetermined operation on the to-be-pushed advertisement, a distribution statistics system may acquire an operation type corresponding to the predetermined operation through an advertisement server; where the predetermined operation may include, but is not limited to: clicking, downloading, reading, forwarding, purchasing, etc. Therefore, the distribution statistics system may count the number of the clicking, downloading, reading, forwarding, purchasing and other operations for each piece of advertisement. That is, counting the clicking, downloading, reading, forwarding, purchasing and other operations into the current user's performance. For example, the operation type corresponding to "clicking" is 001; the operation type corresponding to "downloading" is 002; the operation type corresponding to "forwarding" is 003; the operation type corresponding to "purchasing" is 004; and so on. After acquiring statistical data of the predetermined operation performed on the to-be-pushed advertisement, the distribution statistics system may send the statistical data of the predetermined operation performed on the to-be-pushed advertisement to the settlement profit sharing system. Then, the settlement profit sharing system may send the advertisement pushing revenue generated based on the statistical data of the predetermined operation performed on the to-be-pushed advertisement to the current user.

The method for pushing an advertisement provided by the embodiment of the present disclosure, first acquires the to-be-pushed advertisement in the advertisement docking system; then pushes the to-be-pushed advertisement to the user selected by the current user through the social platform; and if the user selected by the current user performs a predetermined operation on the to-be-pushed advertisement, receives, from the settlement profit sharing system, the advertisement pushing revenue generated based on the predetermined operation. That is, embodiments of the present disclosure may push the to-be-pushed advertisement to the user selected by the current user through social intercourse fission, and the current user may also acquire the advertisement pushing revenue generated based on the predetermined operation performed on the to-be-pushed advertisement by the selected user. In the existing method for pushing an advertisement, it basically releases an advertisement directly to the audience through an advertisement pushy platform, and the content of advertisement are pushed to the audiences without distinguishing between the types of the audiences. This kind of all-round pushing method makes most advertisements unable to be received by the audiences who are really in need and interested; moreover, the pushing method based on the advertisement pushing platform lacks an effective incentive mechanism, so that an advertising performance is not ideal; in addition, the scale of the advertisement pushy platform is limited, so that the scale of advertisements released through the advertisement pushing platform is bound to be limited. Because embodiments of the present disclosure use the technical means of pushing an advertisement through a social platform and generating an advertisement pushing revenue by a settlement profit sharing system, it solves the technical problem that the advertisement pushing scale is limited and the advertising performance is not ideal due to lack of an effective incentive mechanism in the existing technology. The technical solution provided by embodiments of the present disclosure can effectively push advertising creativity to consumer groups independent of the scale of an advertisement pushy platform, so as to achieve the purpose of improving a pushing efficiency and user activity. In addition, the technical solution of embodiments of the present disclosure is simple and convenient to implement, easy to popularize, and has a wider application range.

### Embodiment 4

Fig. 4 is a schematic flowchart of a method for pushing an advertisement according to another embodiment of the present disclosure. As shown in Fig. 4, the method for pushing an advertisement may include the following steps:

S401, receiving an advertisement acquisition instruction sent by the current user through the advertisement docking system, where the advertisement acquisition instruction includes an identifier of the to-be-pushed advertisement.

S402, in response to the advertisement acquisition instruction, providing the to-be-pushed advertisement in the advertisement docking system to the current user.

S403, if a user selected by the current user performs a predetermined operation on the to-be-pushed advertisement, acquiring statistical data of the predetermined operation performed on the to-be-pushed advertisement through a distribution statistics system, and sending the statistical data of the predetermined operation performed on the to-be-pushed advertisement to the settlement profit sharing system.

In an embodiment of the present disclosure, the service-end device may acquire the statistical data of the predetermined operation performed on the to-be-pushed advertisement through the distribution statistics system, and send the statistical data of the predetermined operation performed on the to-be-pushed advertisement to the settlement profit sharing system. Specifically, the service-end device may formulate statistics rules on advertisement pushing through the distribution statistics system, and the rules are used to explain a method for performing statistics for each type or each piece of advertisement. For example, if a friend of the current user reads the advertisement, a statistical score of the current user for the advertisement may be added 1 point; if a fan of the current user purchases a product corresponding to the advertisement, the statistical score of the current user for the advertisement may be added 5 point, etc. Preferably, the service-end device may also formulate an anti-cheating mechanism in the advertisement distribution system. If a user violates an advertisement pushing matter or a pushing rule agreed in advance by the current user in the letter of contract intent in the advertisement pushing process, the service-end device may set the user as an illegal user through the advertisement distribution system, and prohibit the user from the advertisement pushing operations.

S404, sending an advertisement pushing revenue generated based on the statistical data of the predetermined operation performed on the to-be-pushed advertisement to the current user by the settlement profit sharing system.

In an embodiment of the present disclosure, the service-end device may send the advertisement pushing revenue generated based on the statistical data of the predetermined operation performed on the to-be-pushed advertisement to the current user by the settlement profit sharing system. Specifically, the statistical data may include: click data, read data, download data, purchase data; and so on. The service-end device may update the statistical data each time after a user performs a predetermined operation through the distribution statistics system, and then send updated statistical data to the settlement profit sharing system in time; the service-end device may also update the statistical data each time after a predetermined operation is performed, and then periodically send updated statistical data to the settlement profit sharing system. Preferably, the service-end device may formulate advertisement pushing settlement rules through the settlement profit sharing system, which are used to explain a method for charging for each type or each piece of advertisement. For example, if a friend of the current user reads the advertisement, 1 dollar may be added to the current user's billing for the advertisement; and if a fan of the current user purchases a product corresponding to the advertisement, 5 dollar may be added to the current user's billing for the advertisement, etc. In addition, the service-end device may also provide the current user with report statistics, data analysis, etc. through the settlement profit sharing system.

Preferably, in an embodiment of the present disclosure, the service-end device may also send the statistical data of the predetermined operation performed on the to-be-pushed advertisement to the current user through the distribution statistics system. For example, how many times has a friend of the current user clicked the advertisement, how many times a friend of the current user has forwarded the advertisement, etc. In this way, the current user may know a pushing status of the to-be-pushed advertisement in time.

Preferably, in an embodiment of the present disclosure, the service-end device may also receive an advertisement pushing requirement sent by an advertiser through an advertising material platform; and then in response to the advertisement pushing requirement, receive the to-be-pushed advertisement sent by the advertiser, and store the to-be-pushed advertisement to the advertisement docking system. That is, the service-end device may complete the operations such as docking with the advertiser on the advertisement pushing requirement through the advertising material platform, collecting, reviewing, and formatting pushing content to form standardized material that conforms to a particular style; where the particular style is not limited to text, picture, graphics, video, etc. In addition, the service-end device may also specify an advertisement pushing rule through the advertising material platform, to determine requirements for each pushing task, including: billing method, minimum pushing index requirement, highest price requirement, promotion time requirement, etc. For example, the billing method may include: cost per mile (CPM), cost per click (CPC), cost per time (CPT), cost per action/cost per sale (CPA/CPS), etc.; and the minimum pushing index requirement may include: at least 10,000 exposures.

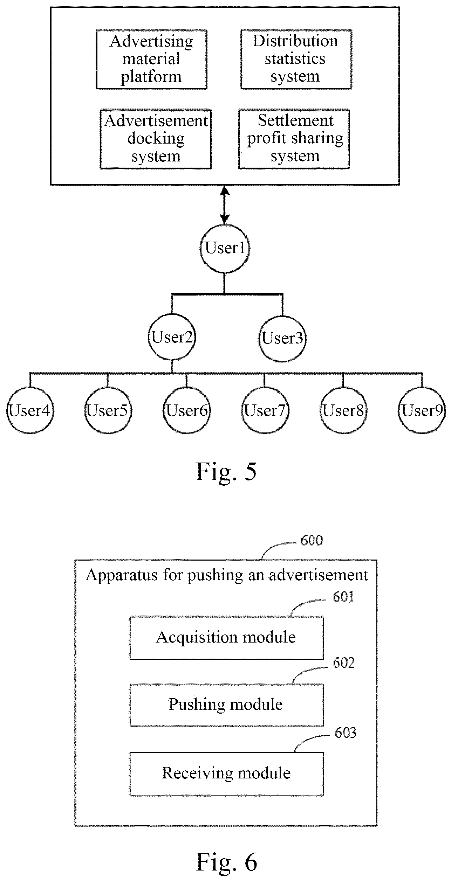

Fig. 5 is a schematic structural diagram of a system for pushing an advertisement provided by an embodiment of the present disclosure. As shown in Fig. 5, the system for pushing an advertisement may include: an advertising material platform, an advertisement docking system, a distribution statistics system, and a settlement profit sharing system. The advertising material platform is configured to complete the docking with an advertiser on an advertisement pushing requirement, collecting, reviewing, and formatting pushing content to form standardized material that conforms to a particular style. The advertisement docking system is configured to dock with a current user and provide the current user with an advertisement as a to-be-pushed advertisement. The distribution statistics system is configured to count the number of times of reading, downloading, or purchasing of an advertisement pushed by a user, by users who follow this user, as the user's advertising productivity. The settlement profit sharing system is configured to send to each user regularly or irregularly a revenue share of his advertisement pushing. In the technical solution provided in embodiments of the present disclosure, after the current user pushes the to-be-pushed advertisement to his friends or fans through a social platform, a friend or fan who follows the current user may also push the to-be-pushed advertisement to the friends or fans thereof through the social platform again. In this regard, the to-be-pushed advertisement may be pushed in a large scale to users who are really interested, not only expanding the advertisement pushing rules, but also improving the advertising performance. For example, user 1 may push a to-be-pushed advertisement to user 2 and user 3; and user 2 may push the to-be-pushed advertisement to user 4, user 5, user 6, user 7, user 8, and user 9.

The method for pushing an advertisement provided by embodiments of the present disclosure, first acquires the to-be-pushed advertisement in the advertisement docking system; then pushes the to-be-pushed advertisement to the user selected by the current user through the social platform; and if the user selected by the current user performs a predetermined operation on the to-be-pushed advertisement, receives, from the settlement profit sharing system, the advertisement pushing revenue generated based on the predetermined operation. That is, embodiments of the present disclosure may push the to-be-pushed advertisement to the user selected by the current user through social intercourse fission, and the current user may also acquire the advertisement pushing revenue generated based on the predetermined operation performed on the to-be-pushed advertisement. In the existing method for pushing an advertisement, it basically releases an advertisement directly to the audience through an advertisement pushy platform, and the content of advertisement are pushed to the audiences without distinguishing between the types of the audiences. This kind of all-round pushing method makes most advertisements unable to be received by the audiences who are really in need and interested; moreover, the pushing method based on the advertisement pushing platform lacks an effective incentive mechanism, so that an advertising performance is not ideal; in addition, the scale of the advertisement pushy platform is limited, so that the scale of advertisements released through the advertisement pushing platform is bound to be limited. Because embodiments of the present disclosure use the technical means of pushing an advertisement through a social platform and generating an advertisement pushing revenue by a settlement profit sharing system, it solves the technical problem that the advertisement pushing scale is limited and the advertising performance is not ideal due to lack of an effective incentive mechanism in the existing technology. The technical solution provided by embodiments of the present disclosure can effectively push advertising creativity to consumer groups independent of the scale of an advertisement pushy platform, so as to achieve the purpose of improving a pushing efficiency and user activity. In addition, the technical solution of embodiments of the present disclosure is simple and convenient to implement, easy to popularize, and has a wider application range.

### Embodiment 5

Fig. 6 is a schematic structural diagram of an apparatus for pushing an advertisement provided by an embodiment of the present disclosure. As shown in Fig. 6, the apparatus 600 includes: an acquisition module 601, a pushing module 602 and a receiving module 603;
the acquisition module 601, configured to acquire a to-be-pushed advertisement in an advertisement docking system;
the pushy module 602, configured to push the to-be-pushed advertisement to a user selected by a current user through a social platform; and
the receiving module 603, configured to, in response to the user selected by the current user performing a predetermined operation on the to-be-pushed advertisement, receive from a settlement profit sharing system an advertisement pushing revenue generated based on the predetermined operation.

Further, the acquisition module 601 is further configured to send an advertisement acquisition instruction to the advertisement docking system, wherein the advertisement acquisition instruction comprises an identifier of the to-be-pushed advertisement; and receive the to-be-pushed advertisement provided by the advertisement docking system in response to the advertisement acquisition instruction.

Further, the acquisition module 601 is further configured to: sign a contract with the advertisement docking system based on the to-be-pushed advertisement, so that a user identity of the current user is changed from a non-subscribed user of the to-be-pushed advertisement to a subscribed user of the to-be-pushed advertisement; and perform, based on the user identity being the subscribed user of the to-be-pushed advertisement, the operation of receiving the to-be-pushed advertisement provided by the advertisement docking system in response to the advertisement acquisition instruction.

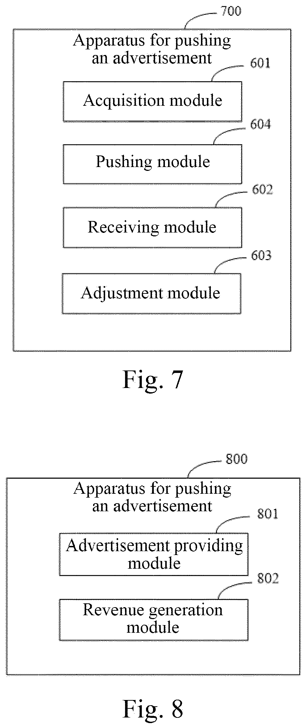

Fig. 7 is a schematic structural diagram of another apparatus for pushing an advertisement provided by an embodiment of the present disclosure. As shown in Fig. 7, the apparatus 700 further includes: an adjustment module 604, configured to adjust a style of the to-be-pushed advertisement within a predetermined range, to obtain a style-adjusted to-be-pushed advertisement; and send the style-adjusted to-be-pushed advertisement to the social platform.

The above apparatus for pushing an advertisement may perform the method provided in any embodiment of the present disclosure, and has the corresponding functional modules and beneficial effects for performing the method. For technical details not described in detail in the present embodiment, reference may be made to the method for pushing an advertisement provided in any one of Embodiment 1 and Embodiment 2 of the present disclosure.

Fig. 8 is a schematic structural diagram of an apparatus for pushing an advertisement according to another embodiment of the present disclosure. As shown in Fig. 8, the apparatus 800 includes: an advertisement providing module 801 and a revenue generation module 802;
the advertisement providing module 801, configured to provide a to-be-pushed advertisement to a current user through an advertisement docking system, such that the current user pushes the to-be-pushed advertisement to a user selected by the current user through a social platform; and
the revenue generation module 802, configured to, in response to the user selected by the current user performing a predetermined operation on the to-be-pushed advertisement, send an advertisement pushing revenue generated based on the predetermined operation to the current user by a settlement profit sharing system.

Further, the revenue generation module 801 is further configured to: acquire statistical data of the predetermined operation performed on the to-be-pushed advertisement through a distribution statistics system, and sending the statistical data of the predetermined operation performed on the to-be-pushed advertisement to the settlement profit sharing system; and send the advertisement pushing revenue generated based on the statistical data of the predetermined operation performed on the to-be-pushed advertisement to the current user by the settlement profit sharing system.

Further, the revenue generation module 802 is further configured to: send an operation type corresponding to the predetermined operation to the distribution statistics system through an advertisement server, such that the distribution statistics system acquires the statistical data of the to-be-pushed advertisement based on the operation type corresponding to the predetermined operation.

Further, the advertisement providing module 801 is further configured to: receive an advertisement acquisition instruction sent by the current user, wherein the advertisement acquisition instruction comprises an identifier of the to-be-pushed advertisement; and in response to the advertisement acquisition instruction, provide the to-be-pushed advertisement in the advertisement docking system to the current user.

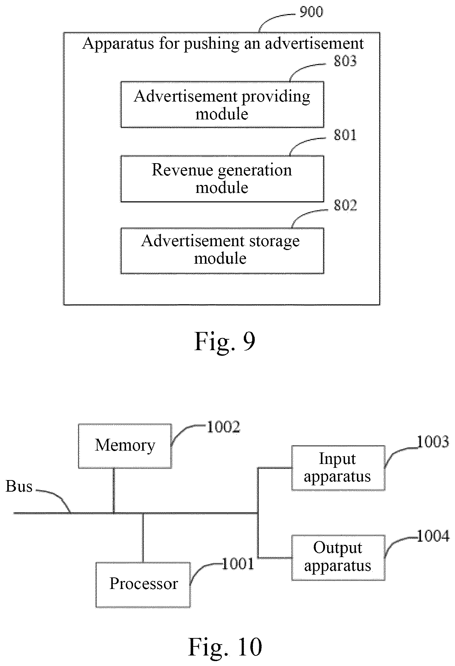

Fig. 9 is a schematic structural diagram of an apparatus for pushing an advertisement according to another embodiment of the present disclosure. As shown in Fig. 9, the apparatus further includes: an advertisement storage module 803, configured to receive an advertisement pushing requirement sent by an advertiser through an advertising material platform; and in response to the advertisement pushing requirement, receive the to-be-pushed advertisement sent by the advertiser, and store the to-be-pushed advertisement into the advertisement docking system.

The above apparatus for pushing an advertisement may perform the method provided in any embodiment of the present disclosure, and has the corresponding functional modules and beneficial effects for performing the method. For technical details not described in detail in the present embodiment, reference may be made to the method for pushing an advertisement provided in any one of Embodiment 3 and Embodiment 4 of the present disclosure.

### Embodiment 7

According to an embodiment of the present disclosure, an electronic device and a readable storage medium are provided.

As shown in Fig. 10, illustrated is a block diagram of an electronic device of the method for pushing an advertisement according to an embodiment of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processors, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 10, the electronic device includes: one or more processors 1001, a memory 1002, and interfaces for connecting various components, including high-speed interfaces and low-speed interfaces. The various components are connected to each other using different buses, and may be installed on a common motherboard or in other methods as needed. The processor may process instructions executed within the electronic device, including instructions stored in or on the memory to display graphic information of GUI on an external input/output apparatus (such as a display device coupled to the interface). In other embodiments, a plurality of processors and/or a plurality of buses may be used together with a plurality of memories and a plurality of memories if desired. Similarly, a plurality of electronic devices may be connected, and the devices provide some necessary operations, for example, as a server array, a set of blade servers, or a multi-processor system. In Fig. 10, one processor 1001 is used as an example.

The memory 1002 is a non-transitory computer readable storage medium provided by the present disclosure. The memory stores instructions executable by at least one processor, so that the at least one processor performs the method for pushing an advertisement provided by the present disclosure. The non-transitory computer readable storage medium of the present disclosure stores computer instructions for causing a computer to perform the method for pushing an advertisement provided by the present disclosure.

The memory 1002, as a non-transitory computer readable storage medium, may be used to store non-transitory software programs, non-transitory computer executable programs and modules, such as program instructions/modules corresponding to the method for pushing an advertisement in embodiments of the present disclosure (for example, the first acquisition module 601, the pushing module 602, and the receiving module 603 as shown in Fig. 6). The processor 1001 executes the non-transitory software programs, instructions, and modules stored in the memory 1002 to execute various functional applications and data processing of the server, that is, to implement the method for pushing an advertisement in the foregoing method embodiments.

The memory 1002 may include a storage program area and a storage data area, where the storage program area may store an operating system and at least one function required application program; and the storage data area may store data created by the use of the electronic device according to the method for pushing an advertisement, etc. In addition, the memory 602 may include a high-speed random access memory, and may also include a non-transitory memory, such as at least one magnetic disk storage device, a flash memory device, or other non-transitory solid-state storage devices. In some embodiments, the memory 1002 may optionally include memories remotely provided with respect to the processor 1001, and these remote memories may be connected to the electronic device of the method for pushing an advertisement through a network. Examples of the above network include but are not limited to the Internet, intranet, local area network, mobile communication network, and combinations thereof.

The electronic device of the method for pushing an advertisement may further include: an input apparatus 1003 and an output apparatus 1004. The processor 1001, the memory 1002, the input apparatus 1003, and the output apparatus 1004 may be connected through a bus or in other methods. In Fig. 10, connection through a bus is used as an example.

The input apparatus 1003 may receive input digital or character information, and generate key signal inputs related to user settings and function control of the electronic device of the method for pushing an advertisement, such as touch screen, keypad, mouse, trackpad, touchpad, pointing stick, one or more mouse buttons, trackball, joystick and other input apparatuses. The output apparatus 1004 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may include: being implemented in one or more computer programs that can be executed and/or interpreted on a programmable system that includes at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

These computing programs (also referred to as programs, software, software applications, or codes) include machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, including machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area networks (LAN), wide area networks (WAN), the Internet, and blockchain networks.

The computer system may include a client and a server. The client and the server are generally far from each other and usually interact through the communication network. The relationship between the client and the server is generated by computer programs that run on the corresponding computer and have a client-server relationship with each other. The Server can be a cloud server, also known as cloud computing server or virtual machine. It is a host product in cloud computing service system, which solves the defects of traditional physical host and VPS service, such as difficult management and weak business scalability.

The technical solution provided by embodiments of the present disclosure, first acquires the to-be-pushed advertisement in the advertisement docking system; then pushes, through the social platform, the to-be-pushed advertisement to a user selected by the current user; and receives, from a settlement profit sharing system, an advertisement pushing revenue generated based on the predetermined operation, in response to the user selected by the current user performs a predetermined operation on the to-be-pushed advertisement. That is, embodiments of the present disclosure may push the to-be-pushed advertisement to the user selected by the current user through the social intercourse fission, and the current user may also acquire the advertisement pushing revenue generated based on the predetermined operation performed on the to-be-pushed advertisement by the selected user. In the existing method for pushing an advertisement, it basically releases an advertisement directly to the audience through an advertisement pushy platform, and the content of advertisement are pushed to the audiences without distinguishing between the types of the audiences. This kind of all-round pushing method makes most advertisements unable to be received by the audiences who are really in need and interested; moreover, the pushing method based on the advertisement pushing platform lacks an effective incentive mechanism, so that an advertising performance is not ideal; in addition, the scale of the advertisement pushy platform is limited, so that the scale of advertisements released through the advertisement pushing platform is bound to be limited. Because embodiments of the present disclosure use the technical means of pushing an advertisement through a social platform and generating an advertisement pushing revenue by a settlement profit sharing system, it solves the technical problem that the advertisement pushing scale is limited and the advertising performance is not ideal due to lack of an effective incentive mechanism in the existing technology. The technical solution provided by embodiments of the present disclosure can effectively push advertising creativity to consumer groups independent of the scale of an advertisement pushy platform, so as to achieve the purpose of improving a pushing efficiency and user activity. In addition, the technical solution of embodiments of the present disclosure is simple and convenient to implement, easy to popularize, and has a wider application range.

It should be understood that the various forms of processes shown above may be used to reorder, add, or delete steps. For example, the steps described in embodiments of the present disclosure may be performed in parallel, sequentially, or in different orders. As long as the desired results of the technical solution disclosed in embodiments of the present disclosure can be achieved, no limitation is made herein.

The above specific embodiments do not constitute limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be included in the protection scope of the present disclosure.

## Claims

1. A method for pushing an advertisement, the method comprising:
acquiring (101) a to-be-pushed advertisement in an advertisement docking system;
pushing (102) the to-be-pushed advertisement to a user selected by a current user through a social platform; and
in response to the user selected by the current user performing a predetermined operation on the to-be-pushed advertisement, receiving (103), from a settlement profit sharing system, an advertisement pushing revenue generated based on the predetermined operation.

2. The method according to claim 1, wherein the acquiring (101) the to-be-pushed advertisement, comprises:
sending (201) an advertisement acquisition instruction to the advertisement docking system, wherein the advertisement acquisition instruction comprises an identifier of the to-be-pushed advertisement; and
receiving the to-be-pushed advertisement provided by the advertisement docking system in response to the advertisement acquisition instruction.

3. The method according to claim 2, wherein before the receiving the to-be-pushed advertisement provided by the advertisement docking system in response to the advertisement acquisition instruction, the method further comprises:
signing (202) a contract with the advertisement docking system based on the to-be-pushed advertisement, so that a user identity of the current user is changed from a non-subscribed user of the to-be-pushed advertisement to a subscribed user of the to-be-pushed advertisement; and
performing (203) the operation of receiving the to-be-pushed advertisement provided by the advertisement docking system in response to the advertisement acquisition instruction, based on the user identity being the subscribed user of the to-be-pushed advertisement.

4. The method according to any one of the preceding claims, wherein before the pushing (102) the to-be-pushed advertisement to the user selected by the current user through the social platform, the method comprises:
adjusting a style of the to-be-pushed advertisement within a predetermined range, to obtain a style-adjusted to-be-pushed advertisement; and
sending the style-adjusted to-be-pushed advertisement to the social platform.

5. A method for pushing an advertisement, the method comprising:
providing (301) a to-be-pushed advertisement to a current user through an advertisement docking system, such that the current user pushes the to-be-pushed advertisement to a user selected by the current user through a social platform; and
in response to the user selected by the current user performing a predetermined operation on the to-be-pushed advertisement, sending (302) an advertisement pushing revenue generated based on the predetermined operation to the current user by a settlement profit sharing system.

6. The method according to claim 5, wherein the sending (302) the advertisement pushing revenue generated based on the predetermined operation to the current user by a settlement profit sharing system, comprises:
acquiring (403) statistical data of the predetermined operation performed on the to-be-pushed advertisement through a distribution statistics system, and sending the statistical data of the predetermined operation performed on the to-be-pushed advertisement to the settlement profit sharing system; and
sending (404) the advertisement pushing revenue generated based on the statistical data of the predetermined operation performed on the to-be-pushed advertisement to the current user by the settlement profit sharing system.

7. The method according to claim 6, wherein the acquiring (403) the statistical data of the predetermined operation performed on the to-be-pushed advertisement through the distribution statistics system, comprises:
sending an operation type corresponding to the predetermined operation to the distribution statistics system through an advertisement server, such that the distribution statistics system acquires the statistical data of the to-be-pushed advertisement based on the operation type corresponding to the predetermined operation.

8. The method according to any one of claims 5 to 7, wherein the providing (301) the to-be-pushed advertisement to the current user through the advertisement docking system, comprises:
receiving (401) an advertisement acquisition instruction sent by the current user, wherein the advertisement acquisition instruction comprises an identifier of the to-be-pushed advertisement; and
in response to the advertisement acquisition instruction, providing (402) the to-be-pushed advertisement in the advertisement docking system to the current user.

9. The method according to claim 8, wherein before the receiving (401) the advertisement acquisition instruction sent by the current user, the method further comprises:
receiving an advertisement pushing requirement sent by an advertiser through an advertising material platform; and
in response to the advertisement pushing requirement, receiving the to-be-pushed advertisement sent by the advertiser, and storing the to-be-pushed advertisement into the advertisement docking system.

10. An apparatus (600) for pushing an advertisement, the apparatus comprising: an acquisition module (601), a pushing module (602) and a receiving module (603);
the acquisition module (601), configured to acquire (101) a to-be-pushed advertisement in an advertisement docking system;
the pushing module (602), configured to push (102) the to-be-pushed advertisement to a user selected by a current user through a social platform; and the receiving module (603), configured to, in response to the user selected by the current user performing a predetermined operation on the to-be-pushed advertisement, receive (103) from a settlement profit sharing system an advertisement pushing revenue generated based on the predetermined operation.

11. The apparatus according to claim 10, wherein the acquisition module (601) is further configured to send (201) an advertisement acquisition instruction to the advertisement docking system, wherein the advertisement acquisition instruction comprises an identifier of the to-be-pushed advertisement; and receive the to-be-pushed advertisement provided by the advertisement docking system in response to the advertisement acquisition instruction.

12. An apparatus (800) for pushing an advertisement, the apparatus comprising: an advertisement providing module (801) and a revenue generation module (802);
the advertisement providing module (801), configured to provide (301) a to-be-pushed advertisement to a current user through an advertisement docking system, such that the current user pushes the to-be-pushed advertisement to a user selected by the current user through a social platform; and
the revenue generation module (802), configured to, in response to the user selected by the current user performing a predetermined operation on the to-be-pushed advertisement, send (302) an advertisement pushing revenue generated based on the predetermined operation to the current user by a settlement profit sharing system.

13. An electronic device, comprising:
at least one processor; and
a memory, communicatively connected to the at least one processor; wherein,
the memory, storing instructions executable by the at least one processor, and the instructions, when executed by the at least one processor, cause the at least one processor to perform the method according to any one of claims 1-4 or 5-9.

14. A non-transitory computer readable storage medium, storing computer instructions, the computer instructions, when executed by a processor, cause the processor to perform the method according to any one of claims 1-4 or 5-9.

15. A computer program product comprising a computer program, the computer program, when executed by a processor, causes the processor to implement the method according to any one of claims 1-4 or 5-9.
